Europäisches Patentamt

European Patent Office

Office européen des brevets

(19)

(11) EP 1 378 981 A2

(12) EUROPEAN PATENT APPLICATION

(43) Date of publication:
07.01.2004 Bulletin 2004/02

(51) Int Cl.7: H02J 1/14

(21) Application number: 03015106.2

(22) Date of filing: 03.07.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 03.07.2002 SE 0202073

(71) Applicant: Dometic Appliances AB
171 54 Solna (SE)

(72) Inventors:
• Gherman, Gheorghe
  187 40 Täby (SE)
• Karlsson, Arne
  591 72 Motala (SE)

(74) Representative:
GROSSE BOCKHORNI SCHUMACHER
Patent- und Rechtsanwälte
Forstenrieder Allee 59
81476 München (DE)

(54) **Power control**

(57) The present invention relates to a method and an apparatus for controlling the power supplied to an electric apparatus. The invention comprises a voltage switch adapted to connect or disconnect a voltage applied to said electric apparatus, and, if the applied voltage in average is higher than a nominal voltage during at least a first portion of a period, to disconnect said applied voltage during at least a second portion of said period, whereby the total energy supplied to said apparatus during said period will be equal to a first specified energy.

Fig. 3

## Description

### Technical field

The present invention relates to a method and an apparatus for controlling the average power applied to an electric apparatus, and in particular the present invention relates to a method and an apparatus for controlling the average power of an electric apparatus in a vehicle.

### Background of the invention

In the case of an electric apparatus, such as a refrigeration apparatus based on absorption technique, powered by a current source which does not necessarily always provide the same voltage, for example a generator connected to a combustion engine, it can be important to limit the average power when the provided voltage is higher than the voltage for which the electric apparatus is nominally designed.

Refrigeration apparatuses powered by 24 VDC to which the voltage is provided by a generator connected to a combustion engine, for example in a vehicle, will receive a relatively unstable voltage. The voltage varies in relation to the actual conditions. For example, if the vehicle is standig with its engine switched off, a fully charged battery will provide 24 VDC, but if the battery is not fully charged the voltage will drop. Normally, the generator has an output voltage of 28 VDC when the engine is running.

Due to such variations of the voltage supplied to the refrigeration apparatus the produced power of the heating element of the boiler of the absorption apparatus will also vary. Too high power supplied to the refrigeration apparatus results in a number of problems. For instance, the temperature performance will be reduced. The temperature performance (the difference between the surrounding temperature and the cabinet temperature) is highest when the power is equal to (in the vicinity of) the nominal power. The temperature performance will be reduced if the power is reduced or increased essentially. When the power increases, the temperature of the boiler will be increased which leads to an increased leaking of heat into the cabinet through the rear wall thereof (due to a greater temperature difference between the surrounding and the cabinet) which means that the temperature of the cabinet will rise. On the other hand, the efficiency of the refrigeration apparatus itself may be reduced due to variations of the temperature of the components of the refrigeration apparatus (boiler, water separator, condenser, etc.), causing the same result, that is higher cabinet temperature.

Increased temperature of the boiler may lead to deterioration of the inhibitory substance which in turn may cause an accelerated corrosion of the refrigeration apparatus.

Consequently, it is preferable to reduce the supplied power. This can be achieved by linear voltage stabilization, for example, whereby the variable input voltage is reduced to a stable output voltage. The efficiancy is relatively low, however, since the loss of power is equal to the "surplus voltage" (that is the supplied voltage minus the nominal voltage) multiplied by the current. In addition, the efficiency is reduced when the supplied voltage increases which is a drawback.

Another method of providing a stable voltage is to use a SMPS unit (Switch Mode Power Supply) wherein the variable input voltage is chopped at a high frequency and subsequently reconstructed to the appropriate constant level of the output voltage. However, such SMPS devices are relatively expensive and large. In addition, the output voltage must be filtered and the voltage source must be protected against incoming transients.

US 5,502,365 "Driving Control apparatus of Motor-Driven Compressor Utilized for Automobile" by Nanbu et al. discloses a control apparatus for supplying electric power to a motor-powered compressor of an automobile. The apparatus comprises a control means adapted to calculate an electric power consumed by the motor-powered compressor and to reduce the consumed electric power when the electric power is above an upper limit.

In this technical field there is thus a need for a method and a device for reducing the applied average power of an electric apparatus to a predetermined nominal level.

### Abstract of the invention

The general object of the present invention is thus to provide a method and an apparatus for eliminating or at least reducing the above-mentioned problems.

It is a particular object of the present invention to provide a method and an apparatus for reducing the average power applied to an electric apparatus, for example a refrigeration apparatus, to the nominal power for which the electric apparatus is designed.

The above-mentioned objects are achieved by a method and an apparatus in accordance with the accompanying independent claims.

Preferred modifications and embodiments of the present invention are provided by the methods and apparatuses set forth in the accompanying dependent claims.

It is an advantage of the present invention that a nominal power for which the electric apparatus is designed can be supplied to the apparatus in spite of the fact that a voltage source for producing said power has a varying voltage.

A further advantage of the present invention is that said apparatus has a reletively high efficiency.

It is a further advantage of the present invention that the apparatus according to the invention is uncomplicated and comprises relatively few components, and has a relatively unexpensive design.

A further advantage of a preferred embodiment according to the present invention is that accelerated corrosion of the boiler of a refrigeration apparatus can be prevented.

It is a further advantage of a preferred embodiment of the invention that a conventional, large and costly A/D converter can be avoided.

Further features and advantages of the invention will be apparent from the following detailed description of embodiments according to the invention.

**Short description of drawings**

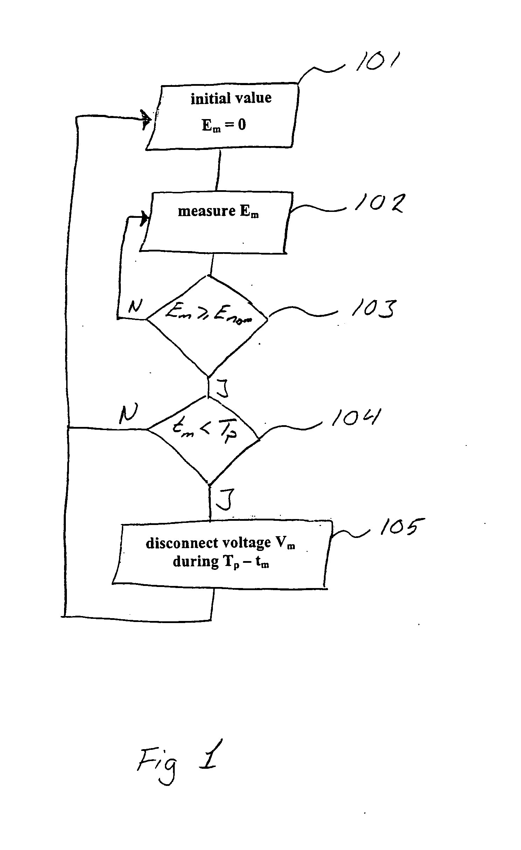

The present invention will be better understood from the detailed description of preferred embodiments according to the present invention set forth below, and the accompanying Figures 1 through 4, the object of which is only to illustrate the preferred embodiments and should not be considered as limiting the scope of the present invention.

Figure 1 is a schematic flow chart according to an embodiment of the present invention.

Figure 2 is an exemplifying voltage diagram over time of the voltage applied to an apparatus utilizing an embodiment of the present invention.

Figure 3 is a schematic diagram of operation according to an embodiment of the present invention.

Figure 4 is a voltage diagram over time of the voltage w across a filter capacitor utilizing an embodiment of the present invention.

**Preferred embodiments**

In the following, detailed specific techniques and applications are described in order to provide a complete understanding of the present invention. However, it is obvious to anyone skilled in the art that the present invention may be implemented in other embodiments different from what has been presented in detail herein. In other cases, detailed descriptions of well-known methods and apparatus have been omitted in order not to obscure the description of the present invention by unnecessary details.

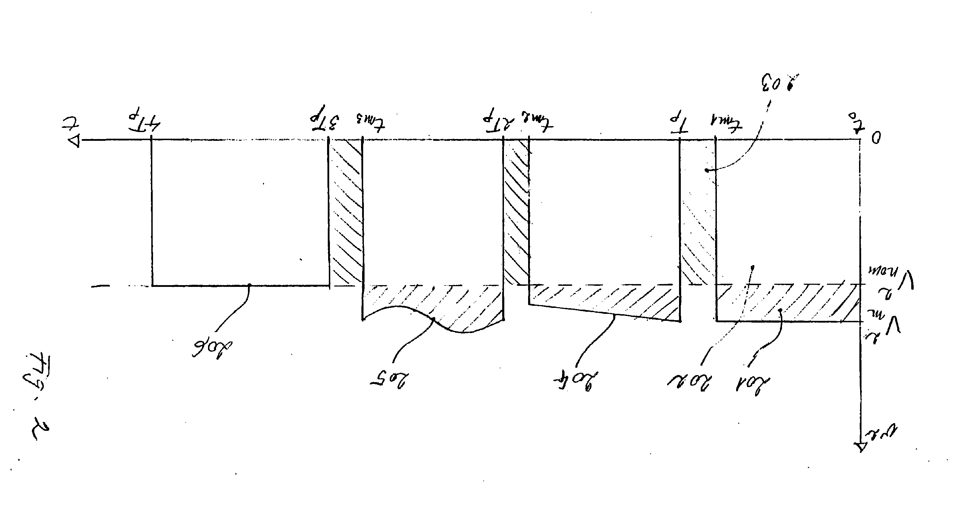

Figure 1 is a flow chart illustrating the principle of a method according to an embodiment of the present invention. Figure 2 is a diagram showing the applied voltage v in square of an electric apparatus over time. At the time $t_0$, that is at the beginning of a period $T_p$, the measured, supplied energy $E_m$ is set to zero in a step 101. The supplied energy $E_m$, directly proportional to the sum of the areas designated 201 and 202 in Figure 2, is then measured in a step 102. At the time $t_{ml}$ the supplied energy $E_m$ is equal to a specified, nominal energy $E_{nom}$. Said energy $E_{nom}$ is directly proportional to the sum of the areas 202 and 203 in Figure 2 and is equal to the amount of energy supplied to the electric apparatus during the period $T_p$ at an applied voltage of $V_{nom}$.

At $t_{ml}$ the condition 103, $E_m \geq E_{nom}$ in Figure 1 is thus met, and since $t_{ml}$ is less than $T_p$, i. e. condition 104 in Figure 1, the voltage $V_m$ is disconnected in a step 105 during the remainder of period $T_p$ and at the beginning of the next period $T_p$ the voltage $V_m$ is switched on again. Consequently, the total energy supplied to the electric apparatus during the period $T_p$ will be equal to the energy that would have been supplied to the apparatus if the nominal voltage $V_{nom}$ had been supplied to the the electric apparatus during the entire period $T_p$. The average power applied to the electric apparatus during a complete number of periods $T_p$ will thereby be generally constant, even if the applied voltage varies and is higher than the nominal voltage. If the applied voltage is equal to the nominal voltage during the entire period $T_p$, the voltage is not disconnected during the respective period.

Another way of expressing the control mechanism is that when the "surplus energy" corresponding to the area 201 in Figure 2 is equal to the energy still required in order to supply the same amount of energy during the entire period as would have been supplied if the nominal voltage had been applied during the entire period, that is the energy corresponding to the area 203 in Figure 2, the applied voltage is disconnected.

Figure 2 shows three additional periods designated 204, 205 and 206, respectively. As can be seen, during the period 206 the voltage is equal to the nominal voltage $V_{nom}$ during the entire period $T_p$, and the voltage is not disconnected during this period.

Figure 3 shows a schematic block diagram of an embodiment according to the invention. A summing unit 301 generates a voltage by adding a portion of the voltage to be measured (that is the voltage applied to the electric apparatus), voltage provided by the voltage source 302, and a portion of a square voltage having a known amplitude from a square generator 303a. Said square generator 303a and the meaure and decision system 303b form parts of a micro control unit 303. First and second voltage dividers 304 and 305 have dividing factors selected so as to provide a square signal at the summing point which is symmetric around the reference voltage of a reference voltage generator 306, when the voltage to be measured is at the middle of the desired span of measurement (+26 V).

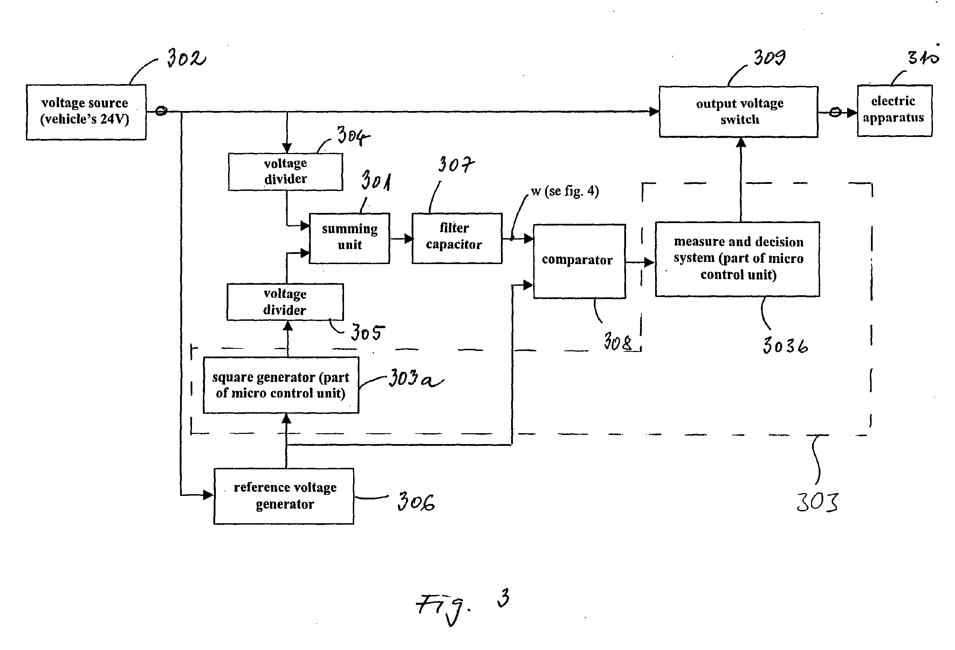

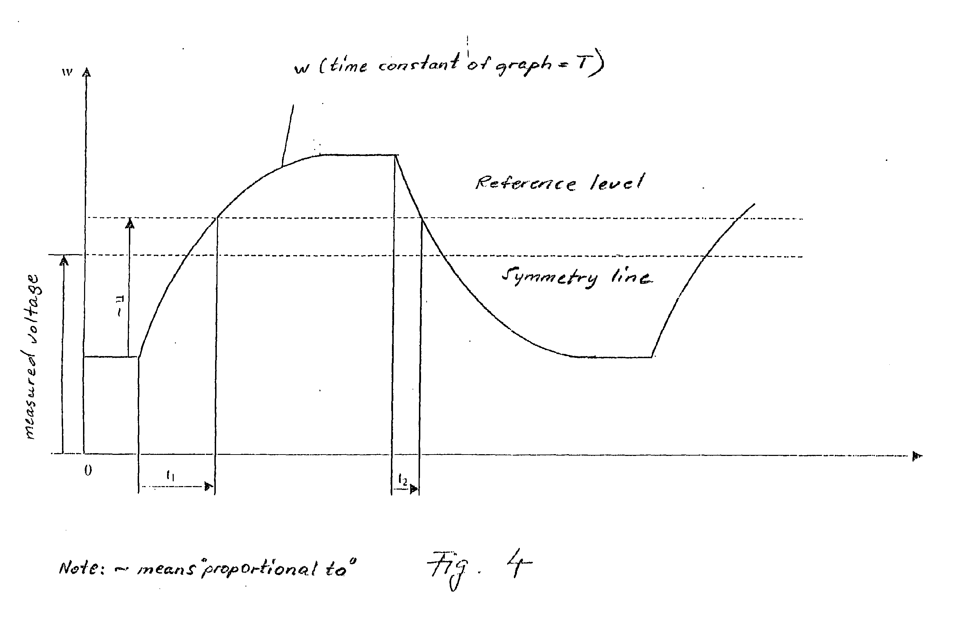

Downstream of the summing point the voltage is also filtered by means of a filter capacitor 307 whereby the voltage transitions are exponentially shaped having a certain rise and fall time. This voltage w over time is shown in Figure 4.

The voltage comparator 308 compares the voltage w to the reference voltage and provides a logic signal to the measure and decision system 303b, said signal being used for measuring the time it takes for the voltage w to reach the reference voltage. The time is measured for positively as well as negatively directed voltage transitions in order to compensate for uncertities of the time constant of the filtering process and of the time reference of the micro control unit (oscillator frequency). The measured voltage is then calculated from these two measured times by means of a calculation algorythm of the micro control unit.

Figure 4 is a diagram showing the voltage w which by the comparator is compared with the reference voltage. In the figure, u $\epsilon$ [0.1 ] is the relative position of the level of the reference voltage from the bottom value of the square signal to the top value thereof at the summing point, T is the time constant of the exponentially shaped voltage transitions, $t_1$ is the time required for reaching the level of the reference voltage at positively directed transitions, and $T_2$ is the time required for reaching the level of the reference voltage at negatively directed transitions (times measured from the starting time point of the respective transition).

It follows that u will be a relative level of the voltage measured within the theoretic span of measurement in which u is zero at the upper limit of the span of measurement and 1 at the lower limit thereof.
The following relation applies:

$$u = 1 - e^{-t_1/T}$$

and

$$u = e^{-t_2/T}$$

resulting in:

$$t_1 = -T \times \ln(1-u),$$

$$t_2 = -T \times \ln(u)$$

from which the following relation can be derived:

$$x = 0.5 \times \frac{t_1 - t_2}{t_1 + t_2} = 0.5 \times \frac{\ln(1-u) - \ln(u)}{\ln(1-u) + \ln(u)}$$

in the above relation, x is a typical time related value in the interval [-0.5, 0.5 ] and is a measure of the extent to which u differs from the central point 0.5. x is equal to -0.5 when the measured voltage is at the upper limit of the span of measurement, +0.5 at its lower limit, and 0 (zero) at the middle thereof (26 V).

It can be seen that the relation between x and u is not dependent on the time constant T. Also, a systematic error in the time reference of the micro control unit is automatically compensated for in that x is a quota of two measured values having the same systematic error. The relation between x and a measured voltage is theoretically correct throughout the interval [-0.5, 0.5 ] of x. The relation is symmetric and reasonably linear at the middle region of the span of measurement.

In case of a limited calculation power it is preferable to approximate the above relation to a simple function. In an embodiment of the present invention the relation between x and u has been approximated to a linear function of the type

$$u = a - bx,$$

in three different intervals of x, one interval centered at 0 (zero), and the others to the left and right of this interval. The relative deviation of the measured voltage corresponding to this approximation is within $\pm$ 1% between 22 and 30 V, which covers the span of variation of the measured voltage. By means of numeric simulation it has been verified that the said maximum deviation can be reached within the said span of measurement by an appropriate selection of dividing factors and by dividing the span of measurement in three intervals having different values of the coefficients of approximation a and b of the respective interval.

An output voltage switch 309 controlled by the micro control unit 303 connects and disconnects the voltage supplied to the electric apparatus 310 according to the invention.

The power regulator operates as set forth below, wherein the specific numbers used are only examples, and appropriate time intervals and voltage levels are selected by a person skilled in the art of every unique application.

The present example relates to a refrigerating apparatus of a motor vehicle. The heating element of the refrigerating apparatus is dimensioned for 24 VDC and 120 W. The time period $T_p$ is 16.78 seconds and each period is divided into 256 intervals of measurement in which every interval is thus 16.78/256 = 0.0655 seconds. After every interval the applied voltage is measured, the measured value is squared, multiplied with the length of the interval, and added to a register of the micro control unit 303. The registered value is then compared with a value corresponding to the energy that would have been supplied to the electric apparatus in case 24 VDC had been supplied during the entire period $T_p$ that is 120 W times 16.78 seconds = 2013.6 J. If the registered value is greater than or equal to a value corresponding to this energy value, the voltage supplied to the electric apparatus is disconnected during the remainder of the period $T_p$.

If the applied voltage is 27 VDC, for example, the energy during each time interval will be 27 $\times$ 27/4.8 $\times$ 0.0655 = 9.95 J. (The internal resistance of the boiler is 24 $\times$ 24/120 = 4.8 Ohm). After 203 intervals the registered value corresponds to 2019.4 J, i.e. higher than 2013.6 J, and the applied voltage is consequently disconnected during the remaining 53 intervals, or during slightly less than 3.5 seconds. The register is then set to zero and a new period is started. Consequently, the power during the period $T_p$ will be 2019.4/16.78 = 120.3 W, which is thus practically the power for which the heating element is dimensioned. Since the refrigerating apparatus is thermally slow, none or very small variations in temperature will appear in the boiler.

It has appeared that if the the period $T_p$ is kept below 30 seconds, the temperature in the boiler can be kept generally constant. Longer time periods may also be used but the function of the boiler will then be slightly deteriorated.

It is obvious that the present invention may be modified in many different ways. Such modifications should not be considered as deviations from the scope of the present invention. All such modifications should be considered included in the scope of the appended claims.

**Claims**

1. A method of controlling the power supplied to an electric apparatus comprising a voltage switch adapted to connect or disconnect a voltage supplied to said electric apparatus, comprising the steps of:

   - measuring the voltage applied to said electric apparatus during a period, continuously or at even entervals,
   - calculating the energy so far supplied to said electric apparatus during said period, continuously or at even intervals, and
   - if the energy so far supplied to said electric apparatus is greater than or equal to a first specified energy, disconnecting said applied voltage during the remainder of said period whereby the total energy supplied to said apparatus during said period will be equal to said first specified energy.

2. Method according to claim 1, wherein said first specified energy is the energy that would be supplied to said apparatus during said period if a nominal voltage were applied during the entire period.

3. Method according to claim 1, further comprising the steps of:

   - for each period measuring the energy, or a value directly proportional thereto, supplied to said apparatus during said at least first portion of said period,
   - when said supplied energy, or a value directly proportional thereto, is greater than or equal to said specified energy, or a value directly proportional thereto, disconnecting said applied voltage during the remainder of said period.

4. Method according to claim 1, further comprising the steps of:

   - measuring said applied voltage at regular, known intervals,
   - calculating the energy, or a value directly proportional thereto, supplied during said known time interval, starting from said measured applied voltage,
   - for each period continuously summing up the calculated energies, or values directly proportional thereto, that have so far been supplied to said apparatus during said period,
   - disconnecting said applied voltage when said sum is greater than said specified energy.

5. Method according to claim 1, further comprising the steps of:

   - continuously measuring the energy, or a value directly proportional thereto, supplied to said apparatus during said period,
   - disconnecting said applied voltage when said measured energy, or a value directly proportional thereto, is greater than or equal to said specified energy.

6. Method according to claim 1, further comprising the steps of:

   - adding at least a portion of a square signal having a known amplitude to at least a portion of said applied voltage in order to provide a square voltage having upper and lower levels at a constant mutual distance and at an average level directly related to said applied voltage,
   - filtering said square voltage by at least one capacitor,
   - measuring a first time required for the voltage of said capacitor to alter from said lower level to a reference level at a positively directed voltage transition of said square voltage,
   - measuring a second time required for the voltage of said capacitor to alter from said upper level to said reference level at a negatively directed voltage transition of said square voltage,
   - calculating the value of said applied voltage starting from said first and said second time.

7. Method according to claim 1, wherein said apparatus is an apparatus of a group of apparatuses comprising refrigeration plants based on absorption technique and other heat powered apparatuses.

8. Method according to claim 1, vherein said applied voltage is derived from a generator connected to an engine.

9. Method according to claim 1, wherein a battery provides said applied voltage when said engine is switched off.

10. Method according to claim 1, wherein said period is less than or equal to 30 seconds, preferably 16.7 seconds, and said period is divided into 256 equally long time intervals.

11. Power control apparatus for controlling the power supplied to an electric apparatus comprising a voltage switch adapted to connect or disconnect a voltage applied to said electric apparatus, **characterized by**

    - an energy meter for continuously or at even intervals measuring the energy, or a value directly proportional thereto, supplied to said electric apparatus during at least a first portion of a period, and
    - a control unit connected to said energy meter and adapted to control said voltage switch to disconnect said voltage applied to said electric apparatus during the remainder of said period if the supplied energy, or said value directly proportional thereto, is greater than a first specified energy during said first portion of said period.

12. Power control apparatus according to claim 11, wherein said first specified energy, or a value directly proportional thereto, is the energy, or a value directly proportional thereto, that would be supplied to said electric apparatus during said period if a nominal voltage were applied to said electric apparatus during the entire period.

13. Power control apparatus according to claim 11, wherein:

    - said energy meter is adapted to measure said voltage applied to said electric apparatus at regular, known time intervals,
    - said energy meter is adapted to calculate, starting from said measured applied voltage, the energy, or a value directly proportional thereto, during said known time interval,
    - said control unit is adapted to continuously sum up the calculated energies, or the values directly proportional thereto, that have so far been supplied to said apparatus during said period, and
    - said control unit is adapted to disconnect said applied voltage when said sum is greater than said specified energy, or a value directly proportional thereto.

14. Power control apparatus according to claim 11, wherein:

    - said energy meter is adapted to continuously measure the energy, or a value directly proportional therto, supplied to said apparatus during said period, and
    - said control unit is adapted to disconnect said applied voltage when said measured energy, or a value directly proportional thereto, is greater than or equal to said specified energy, or a value directly proportional thereto.

15. Power control apparatus according to claim 11, wherein:

    - said energy meter comprises first means adapted to add at least a portion of a square signal having a known amplitude to at least a portion of said applied voltage in order to provide a square voltage,
    - said energy meter comprises a second means adapted to filter said square voltage by at least one capacitor,
    - said energy meter comprises a third means adapted to measure a first time required for the voltage of said capacitor to alter from said lower level to a reference level at a positively directed voltage transition of said square voltage, and a second time required for the voltage of said capacitor to alter from said upper level to said reference level at a negatively directed voltage transition of said square voltage,
    - said energy meter comprises a fourth means adapted to calculate the value of said applied voltage starting from said first and said second time.

16. Power control apparatus according to claim 11, wherein said apparatus is an apparatus from a group of apparatuses comprising refrigeration plants based on absorption technique and other heat powered apparatuses.

17. Power control apparatus according to claim 11, wherein said applied voltage is derived from a generator connected to an engine.

18. Power control apparatus according to claim 11, wherein a battery provides said applied voltage when said engine is switched off.

19. Power control apparatus according to claim 11, wherein said period is less than or equal to 30 seconds, preferably 16.78 seconds, and said period is divided into 256 equally long time intervals.

101

initial value
$E_m = 0$

102

measure $E_m$

103

N $E_m \geqslant E_{nom}$

J

104

N $t_m < T_p$

J

105

disconnect voltage $V_m$
during $T_p - t_m$

Fig 1

Fig. 2

302 voltage source (vehicle's 24V)

304 voltage divider

301 summing unit

307 filter capacitor

w (se fig. 4)

308 comparator

3036 measure and decision system (part of micro control unit)

309 output voltage switch

310 electric apparatus

305 voltage divider

303a square generator (part of micro control unit)

306 reference voltage generator

303

EP 1 378 981 A2

Fig. 3

w (time constant of graph = T)

w

measured voltage

Reference level

Symmetry line

$u$

0

$t_1$

$t_2$

Note: ~ means "proportional to"

Fig. 4

EP 1 378 981 A2